# DEMANDE DE BREVET EUROPEEN

(11) **EP 1 202 529 A2**
(43) Date de publication de la demande: **02.05.2002**
(21) Numéro de dépôt: 01402706.4
(22) Date de dépôt: 19.10.2001
(51) Int. Cl.: H04L 29/06, H04L 29/12

(54) **Procédé et systéme de communication de données**

(30) Priorité: 24.10.2000 FR 0013648
(71) Demandeur: Netcelo, 38130 Echirolles (FR)
(72) Inventeur: Fiori, Costantino, 38130 Echirolles (FR); Guionneau, Christophe, 3800 Grenoble (FR); Cayuela, Jacques, 38700 La Tronche (FR)
(74) Mandataire: Casalonga, Axel

(57) **Abrégé**

Procédé et système de communication de données entre un premier poste-utilisateur d'un premier réseau et un deuxième poste-utilisateur d'un deuxième réseau par un réseau du type Internet, dans lequel, après qu'un terminal d'accès a obtenu une adresse publique destinée à une communication entre le premier poste-utilisateur et le deuxième poste-utilisateur, ledit terminal d'accès se connecte à l'administrateur, l'administrateur fournit audit terminal d'accès des données de connexion et à des destinataires lesdites données de connexion et ladite adresse publique, et le terminal d'accès établit un tunnel de communication avec le deuxième poste-utilisateur ou avec un terminal d'accès du deuxième poste-utilisateur, puis une communication avec le deuxième poste-utilisateur.

## Description

La présente invention concerne les communications sur un réseau, notamment un réseau Internet.

On connaît des moyens pour échanger des données selon le protocole TCP/IP.

L'invention propose de fournir un procédé de communication sécurisé.

Le procédé de communication de données, selon un aspect de l'invention, est prévu entre un premier poste-utilisateur d'un premier réseau et un deuxième poste-utilisateur d'un deuxième réseau par un réseau du type Internet, dans lequel après qu'un terminal d'accès a obtenu une adresse publique destinée à une communication entre le premier poste-utilisateur et le deuxième poste-utilisateur, ledit terminal d'accès se connecte à l'administrateur, l'administrateur fournit audit terminal d'accès des données de connexion et à des destinataires lesdites données de connexion et ladite adresse publique, et le terminal d'accès établit un tunnel de communication avec le deuxième poste-utilisateur ou avec un terminal d'accès du deuxième poste-utilisateur, puis une communication avec le deuxième poste-utilisateur.

De préférence, ledit terminal d'accès se connecte à l'administrateur en établissant un tunnel de communication.

Dans un mode de réalisation de l'invention, ledit tunnel de communication est chiffré.

De préférence, ledit terminal d'accès envoie à l'administrateur son adresse publique et son identifiant.

Dans un mode de réalisation de l'invention, les données de connexion fournies par l'administrateur audit terminal d'accès comprennent des règles de sécurité et une liste de terminaux d'accès à réveiller. Les données de connexion peuvent être fournies par l'administrateur audit terminal d'accès avant d'établir des communications vers d'autres postes-utilisateurs.

Dans un mode de réalisation de l'invention, le tunnel de communication entre le terminal d'accès et l'administrateur est détruit une fois que l'administrateur a fourni au terminal d'accès des données de connexion permettant au terminal d'accès d'établir des tunnels de communication vers d'autres postes-utilisateurs.

Dans un mode de réalisation de l'invention, à la fin de la communication avec le deuxième poste-utilisateur, le tunnel de communication est détruit.

De préférence, le terminal d'accès établit un tunnel de communication avec un autre terminal d'accès en communication avec le deuxième poste-utilisateur, puis une communication avec ledit autre terminal d'accès.

Dans un mode de réalisation de l'invention, les données de connexion fournies par l'administrateur audit terminal d'accès sont également fournies à l'autre terminal d'accès.

L'invention propose également un système de communication de données comprenant un premier poste-utilisateur d'un premier réseau, un terminal d'accès, un administrateur de réseau et un deuxième poste-utilisateur d'un deuxième réseau, le réseau étant du type Internet. Le terminal d'accès comprend un moyen pour obtenir une adresse publique destinée à une communication entre le premier poste-utilisateur et le deuxième poste-utilisateur, un moyen pour se connecter à l'administrateur, et un moyen pour établir un tunnel de communication avec le deuxième poste-utilisateur ou avec un terminal d'accès du deuxième poste-utilisateur, puis une communication avec le deuxième poste-utilisateur. L'administrateur comprend un moyen pour fournir des données de connexion audit terminal d'accès et un moyen pour fournir lesdites données de connexion et ladite adresse publique à des destinataires

L'invention concerne également un programme d'ordinateur comprenant des moyens de code programme pour mettre en oeuvre les étapes du procédé, lorsque ledit programme fonctionne sur un ordinateur.

L'invention concerne également un support capable d'être lu par un dispositif de lecture de moyens de code programme qui s'y trouvent stockés et qui sont aptes à la mise en oeuvre des étapes du procédé, lorsque ledit programme fonctionne sur un ordinateur.

On réalise un protocole d'obtention dynamique de configuration pour des systèmes utilisant des adresses IP dynamiques ou statiques. Avant que l'utilisateur établisse une communication, on met en oeuvre des règles de sécurité, puis on peut les mettre à jour dynamiquement. Les abonnés du réseau Internet, résidentiels, de petites structures ou de petites entreprises accèdent à Internet après avoir souscrit un abonnement auprès d'un fournisseur d'accès Internet. Dans la majorité des cas, cet accès se fait à la demande de l'abonné pour une session donnée, au moyen d'une adresse Internet dite IP publique dynamique qui lui est attribuée par son fournisseur d'accès. L'adresse IP publique n'est allouée par le fournisseur d'accès à l'abonné que le temps de la session demandée et est détruite lorsque l'abonné met fin à celle-ci.

Deux internautes qui accéderaient au réseau Internet par leur terminaux d'accès respectifs du genre modem analogique ou numérique, par exemple RNIS ou ADSL, routeur, modem câble, etc. ne peuvent se transférer et recevoir des données numériques en direct d'ordinateur personnel à ordinateur personnel que si au préalable ils peuvent s'échanger leurs adresses IP respectives. On peut prévoir un échange automatique des adresses IP avant l'établissement des connexions entre les terminaux d'accès. On peut aussi prévoir une solution pour réveiller le terminal d'accès distant si celui-ci n'est pas déjà connecté à Internet.

L'invention offre une solution dynamique et autonome pour réaliser des connexions directes sur Internet entre les abonnés.

L'invention s'applique à des adresses IP publiques dynamiques mais aussi à des adresses publiques statiques, et permet l'établissement de communications entre adresses publiques dynamiques et des adresses IP publiques statiques. En effet, dans certains types d'abonnement, les fournisseurs d'accès donnent une adresse publique statique à la place d'une adresse publique dynamique.

De façon générale, on entend ici par "tunnel" les tunnels de type IPSEC tels qu'illustrés par le document "RFC 2401, Security Architecture for the Internet Protocol, Novembre 1998, http://www.normos.org/ietf/rfc/rfc2401.txt, les tunnels L2TP, voir le document "RFC 2661, Layer Two Tunneling Protocol "L2TP" Août 1999, http://www.rfc-editor.org/rfc/rfc2661.txt ou encore tout autre type de tunnel, voir le document "RFC 1853, IP in IP Tunneling, octobre 1995, http:www.rfc-editor.org/rfc/rfc1853.txt", qu'il soit sécurisé ou non sécurisé avec ou sans clé de chiffrement. Il va de soi que l'utilisation des tunnels doit être faite de façon cohérente en particulier, l'adressage IP des machines et des systèmes mis en relation au travers d'un tunnel de communication doit être cohérent. On peut établir une communication directe, via le réseau Internet entre un appelant et au moins un appelé dépourvu d'adresse publique permanente en envoyant, par l'appelant, un message à un système de contrôle et d'administration de services, le message comportant des données propres à l'appelant permettant audit système d'autoriser la connexion de l'appelant, et une requête de connexion avec l'appelé permettant audit système d'identifier l'appelé, en vérifiant, par ledit système, de ce que l'appelé est déjà en communication sur le réseau Internet et dispose d'une adresse publique dynamique déclarée au système, si l'appelé n'est pas en communication Internet ou si ledit système n'en a pas connaissance, en réveillant l'appelé par le système via le réseau téléphonique commuté, en établissant, le cas échéant, une session Internet par l'appelé, et en envoyant par l'appelé un message au système, le message comportant des coordonnées de connexion au réseau Internet de l'appelé, en envoyant par le système des coordonnées de connexion au réseau Internet de l'appelé à l'appelant et des coordonnées de connexion au réseau Internet de l'appelant à l'appelé, et en réalisant, à l'aide des coordonnées de connexion au réseau Internet de l'appelant et de l'appelé, une voie de communication directe entre l'appelant et l'appelé, via le réseau Internet.

Les données propres à l'appelant envoyées au système comprennent l'adresse publique dynamique de l'appelant et, le cas échéant, au moins un élément du genre numéro, numéro de ligne, nom, identifiant, mot de passe, données d'identification de l'appelant...

La présente invention sera mieux comprise à l'étude de la description détaillée d'un mode de réalisation pris à titre d'exemple nullement limitatif et illustré par les dessin annexé, sur lequel :

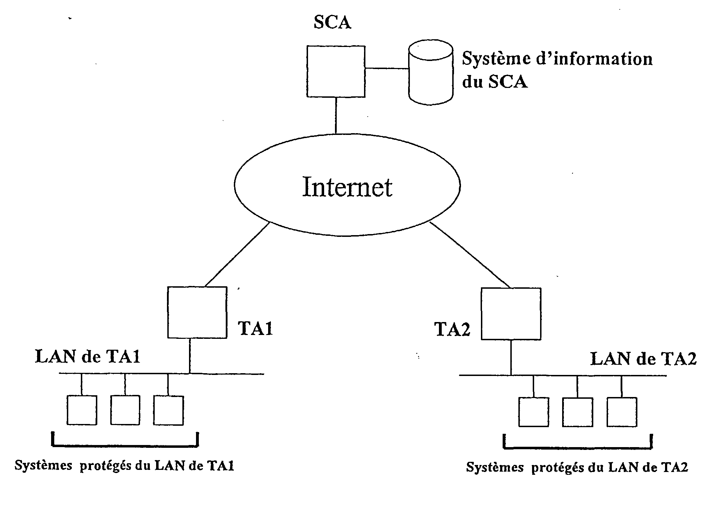

- la figure 1 est une vue schématique de l'architecture d'un réseau Internet.

Comme on peut le voir sur la figure, un système de contrôle et d'administration SCA est pourvu d'un système d'information, par exemple d'une base de données et relié au réseau Internet par câble, fibre optique ou autre. Une pluralité de terminaux d'accès TA sont également reliés au réseau Internet. Ici, on a représenté les terminaux d'accès TA1 et TA2. Chaque terminal d'accès TA1, TA2 est relié à un réseau local LAN pourvu d'une pluralité de routeurs, non représentés, eux mêmes reliés aux interfaces avec les abonnés, par exemple à leurs ordinateurs personnels également dénommés systèmes protégés.

Le système de contrôle et d'administration SCA est relié en permanence au réseau Internet et dispose d'une adresse IP fixe. A la condition que les usagers disposent de droits d'accès auprès de l'administrateur du système SCA, les terminaux d'accès TA1, TA2 peuvent se connecter à la demande au SCA, via le réseau Internet, et accéder ainsi aux services fournis par celui-ci. Le système d'information du système SCA contient des informations sur les terminaux d'accès, sur les systèmes protégés des terminaux d'accès, les droits des terminaux d'accès et des systèmes protégés, etc. Le système d'information peut être une base de données, un annuaire LDAP, voir le document "RFC 2251 Lightweight Directory Access Protocol (V3), décembre 1997, http://www.rfc-editor.org/rfc/rfc2251.txt" ou n'importe quel système permettant de stocker des informations. Les ordinateurs des usagers sont connectés aux terminaux d'accès respectifs TA1, TA2 et protégés par ces derniers.

Plus précisément, les terminaux d'accès TA1, TA2 sont les interfaces entre le réseau local LAN de l'abonné et le réseau Internet. Les terminaux d'accès se connectent à Internet par un protocole de connexion à la demande et utilisent l'adresse IP publique attribuée par le fournisseur d'accès à Internet auquel ils sont rattachés. Les terminaux d'accès se connectent au système de contrôle et d'administration SCA à chaque reconnexion Internet pour signaler leur présence, pour fournir leur nouvelle adresse IP publique et recevoir leur politique de sécurité. Les terminaux d'accès TA1, TA2 sont aptes à créer des tunnels de communication, sont les initiateurs de demandes de réveil vers les autres terminaux d'accès auprès du système de contrôle et d'administration SCA et sont les initiateurs des connexions vers les autres terminaux d'accès par établissement de tunnel.

Le système de contrôle et d'administration SCA est connecté en permanence au réseau Internet et dispose d'une ou plusieurs adresses IP fixe connues aux terminaux d'accès TA. Le système de contrôle et d'administration reçoit le signalement des connexions Internet des terminaux d'accès TA et leur demande leurs règles de sécurité, les demandes de réveil automatique des terminaux d'accès désirant établir des connexions vers d'autres terminaux d'accès non connectés à Internet et fournissent des mises à jour des règles de sécurité aux terminaux d'accès TA au fur et à mesure des connexions et des déconnexions des terminaux d'accès à Internet et de l'obtention de nouvelles adresses IP publiques, dynamiques ou statiques.

Périodiquement, le système SCA contrôle les règles de sécurité et, l'état des terminaux d'accès TA, les tunnels établis par les terminaux d'accès TA tout en possédant la capacité de les détruire, et vérifie que les terminaux d'accès TA sont toujours connectés à Internet tout en mettant à jour les règles de sécurité des terminaux d'accès correspondants en cas de déconnexion brutale d'Internet. Le système de contrôle et d'administration SCA n'intervient pas dans l'établissement des tunnels entre les terminaux d'accès, communications qui sont établies entre les terminaux d'accès TA de manière autonome.

En fonctionnement, on cherche à mettre en communication le terminal d'accès TA1 pris comme émetteur et le terminal d'accès TA2 pris comme récepteur. La mise en communication entre TA1 et TA2 ne passe pas nécessairement par le système de contrôle et d'administration. Néanmoins, le système de contrôle et d'administration contrôle et distribue les règles de sécurité à jour aux terminaux d'accès TA pour autoriser l'établissement de leur communication.

Considérons un abonné qui accède au réseau Internet par un lien RNIS au travers du terminal d'accès TA1. Les terminaux d'accès TA1 et TA2 sont déclarés dans le système d'information du SCA comme faisant partie d'un même groupe et disposent du droit de communiquer entre eux. On suppose que le terminal d'accès TA1 possède le droit d'établir des connexions avec le terminal d'accès TA2 et on suppose que le terminal d'accès TA2 est déjà connecté à Internet.

Lorsqu'un usager du terminal d'accès TA1 essaie d'établir une connexion sortante, le mécanisme de connexion à la demande établit la connexion Internet vers le fournisseur d'accès Internet, non représenté, qui attribue une adresse IP publique au terminal d'accès TA1. Lorsque le terminal d'accès TA1 a obtenu son adresse IP publique, il se connecte au système de contrôle et d'administration SCA au travers d'un tunnel IP, chiffré ou non. Le terminal d'accès TA1 fournit sa propre adresse IP publique et son identification au SCA, soit dans la même connexion, soit par un rappel du SCA vers le terminal d'accès TA1 pour vérifier son identité sur réseau commuté, RNIS, ADSL etc. On entend par identification, le nom, numéro de téléphone, adresse MAC, voir le document "Medium Access Control, http://www.ieee.org/", identification unique ou numéro de série, etc. Le système de contrôle et d'administration fournit au terminal d'accès TA1 ses règles de sécurité, c'est-à-dire une liste de règles de sécurité à appliquer pour que le terminal d'accès TA1 puisse établir directement ses connexions Internet vers ses correspondants. Le terminal d'accès TA1 peut, par configuration, accepter ou de refuser d'ouvrir ses communications tant qu'il n'a pas obtenu ses règles de sécurité. Dans le cas où le terminal d'accès TA1 n'attend pas les règles de sécurité, il convient d'accepter d'appliquer de précédentes règles de sécurité qui peuvent être éventuellement erronées ou vides.

Le terminal d'accès TA1 reçoit également la liste des terminaux d'accès TAi, i différent de 1 à réveiller avant d'essayer d'établir des communications Internet vers les adresses IP de ce correspondant. Cette liste est aussi appelée politique de réveil. Le système de contrôle et d'administration transmet à chacun des terminaux d'accès qui sont des correspondants autorisés du terminal d'accès TA1 et déclarés dans le système d'information du SCA, une mise à jour des règles de sécurité desdits terminaux d'accès TAi, i différent de 1 avec la nouvelle adresse IP publique du terminal d'accès TA1.

Plus précisément, la communication peut être établie selon les étapes suivantes :
- étape 1 : un usager du terminal d'accès TA1 tente d'établir une communication sortante au travers du terminal d'accès TA1.
- étape 2 : le mécanisme de connexion à la demande connecte le terminal d'accès TA1 à Internet et ledit terminal d'accès TA1 reçoit une adresse IP publique.
- étape 3 : le terminal d'accès TA1 se connecte au système de contrôle et d'administration SCA au travers d'un tunnel et fournit sa propre adresse IP et sa propre identité au système SCA.
- étape 4 : le système SCA construit des règles de sécurité du terminal TA1 avec les données de son système d'information et avec les adresses IP publiques obtenues par les correspondants possibles du terminal TA1 déjà connecté à Internet.
- étape 5 : le système SCA construit les listes des terminaux TAi, i différent de 1 susceptibles de correspondre avec le terminal TA1 et qui doivent être réveillés avant de tenter une communication vers les adresses IP protégées par les terminaux TAi, i différent de 1.
- étape 6 : le système SCA transmet au terminal TA1 les règles de sécurité et les clés de chiffrement des autres terminaux TAi, i différent de 1 susceptible de correspondre avec le terminal TA1.
- étape 7 : le système SCA transmet au terminal TA1 la liste des autres terminaux d'accès TAi, i différent de 1 à réveiller et les adresses IP protégées et associées. Le terminal TA2 étant déjà réveillé, le système SCA peut décider de ne pas inclure le terminal TA2 dans la liste des autres terminaux à réveiller pour éviter que le terminal TA1 n'effectue des demandes abusives de réveil.
- étape 8 : le système SCA vérifie que le terminal TA1 a bien pris en compte l'ensemble de ses nouvelles règles.
- étape 9 : pour chacun des correspondants du terminal TA1, ici le terminal TA2 uniquement, le système SCA construit une mise à jour des règles de sécurité avec la nouvelle adresse IP publique de TA1.
- étape 10 : le système SCA transmet au terminal TA2 une mise à jour de ses règles de sécurité contenant une règle avec la nouvelle adresse IP publique du terminal TA1 et la clé du chiffrement nécessaire à l'établissement du tunnel entre les terminaux TA2 et TA1. Le système SCA transmet au terminal TA2 une mise à jour de la politique de réveil de ce dernier.
- étape 11 : la communication entre le terminal TA1 et le système SCA se termine et le tunnel entre le terminal TA1 et le système SCA est détruit.
   A ce stade, le système SCA a fourni au terminal TA1 de nouvelles règles de sécurité et de réveil et au terminal TA2 une mise à jour des siennes. Pour des raisons de synchronisation, il peut s'avérer préférable de transférer les règles de sécurité et la politique de réveil aux terminaux TA1 et TA2 et de les valider simultanément plutôt que des les appliquer une par une. Si les règles de sécurité et de réveil sont appliquées de façon indépendante, il pourrait exister un laps de temps pendant lequel les essais de communication peuvent échouer ou peuvent donner lieu à une sécurité défectueuse.
   Considérons maintenant un abonné qui accède au réseau Internet au travers du terminal TA1. On suppose que les terminaux TA1 et TA2 sont connectés à Internet et ont obtenu leurs règles de sécurité auprès du système SCA.
- Au cours d'une étape 12, un système protégé sur le réseau LAN du terminal d'accès TA1 tente d'établir une communication IP vers un système protégé du réseau LAN du terminal TA2.
- étape 13 : le terminal TA1 détecte par des moyens appropriés tels qu'une table de routage, une demande de communication depuis un système de son réseau local LAN vers un système du réseau local LAN du terminal TA2. Pour plus de renseignements sur les tables de routage, on peut se reporter au document "RFC 1812 Requirements for IP Version 4 Routers, juin 1995, http://www.rfc-editor.org/rfc/rfc1812.txt"
- étape 14 : un tunnel par exemple de type IPSEC est établi entre les terminaux TA1 et TA2.
- étape 15 : la communication est établie entre l'adresse IP du système émetteur et l'adresse IP du système destination au travers du tunnel.
- étape 16 : éventuellement à partir de règles de sécurité les terminaux TA1 et TA2 signalent au système SCA l'établissement d'un tunnel respectivement en sortie du terminal TA1 et en entrée du terminal TA2.
- étape 17 : lorsqu'il n'y a plus d'activité sur les communications passant par le tunnel établi entre les terminaux TA1 et TA2 ou à l'initiative d'un des deux terminaux, le tunnel est détruit et éventuellement selon la configuration des terminaux TA1, TA2, ceux-ci signalent au système SCA la destruction des tunnels.
   Le système SCA peut, à tout moment, pendant l'utilisation du tunnel, demander au terminal TA1 ou au terminal TA2 la destruction du tunnel suite à une demande faite par un usager autorisé, à partir d'une page WEB dédiée par exemple. De même, à tout moment, les terminaux TA1 et TA2 peuvent recevoir une mise à jour de leur politique de sécurité invalidant l'utilisation d'un tunnel établi selon les règles de sécurité précédentes.
   Supposons maintenant que l'établissement de communication nécessite le réveil du terminal TA2.
   On suppose donc que le terminal TA2 n'est pas connecté à Internet mais que le terminal TA1 a le droit de demander au système SCA le réveil du terminal TA2.
- étape 18 : un système du terminal TA1 veut établir une communication au travers du terminal TA1 et par le réseau Internet vers un système du terminal TA2.
- étape 19 : le terminal TA1 détecte une demande de communication depuis un système de son réseau local LAN vers un système du réseau local LAN du terminal TA2.
- étape 20 : le terminal TA1 ne possède pas dans ses règles de sécurité l'adresse IP publique du terminal TA2. Le terminal TA2 est dans la liste des terminaux TAi, i différent de 1 à réveiller avant d'établir une communication.
- étape 21 : le terminal TA1 se connecte au système SCA au travers d'un tunnel.
- étape 22 : le système SCA vérifie l'identité du terminal TA2 au travers des informations fournies par le terminal TA1 et des informations contenues dans le système d'information.
- étape 23 : le terminal TA1 demande au système SCA le réveil du terminal TA2.
- étape 24 : le réveil du terminal TA2 est activé par le système SCA si le terminal TA1 est autorisé à réveiller le terminal TA2. Le système SCA dispose des moyens nécessaires pour effectuer le réveil, de manière synchrone, le terminal TA1 étant en attente du réveil du terminal TA2, ou de manière synchrone. Le terminal TA1 n'attend pas la fin du réveil du terminal TA2. On suppose dans ce qui suit que le réveil est effectué de manière synchrone.
- étape 25 : le terminal TA2 reçoit la demande de réveil et répond par une connexion à Internet pour accéder au système SCA, ce qui active la procédure décrite ci-dessus en référence aux étapes 1 à 11.
- étape 26, lorsque le terminal TA2 a pris en compte ses règles de sécurité, il signale au système SCA la fin de son réveil.
- étape 27 : la communication entre le terminal TA2 et le système SCA se termine et le tunnel entre le terminal TA2 et le système SCA est détruit.
- étape 28 : le terminal TA1 reçoit du système SCA la mise à jour de ses règles de sécurité, les prend en compte et peut ainsi établir une communication vers le terminal TA2, voir ci-dessus les étapes 12 à 17.
- étape 29 : la communication entre le terminal d'accès TA1 et le système SCA se termine et le tunnel TA1- SCA est détruit après que le système SCA a fourni au terminal TA1 la mise à jour de ses règles de sécurité.

Dans le cas du réveil, le terminal TA1 ne peut pas établir de tunnel vers le terminal TA2 et ne dispose pas de l'adresse IP du terminal TA2, ni des clefs de chiffrement nécessaire à l'établissement du tunnel vers le terminal TA2. La communication qui nécessitait l'établissement de ce tunnel est soit mise en attente, soit rejetée jusqu'à ce que le terminal TA1 reçoive une mise à jour de ses règles de sécurité et de sa politique de réveil quand le terminal TA2 aura fini sa phase de réveil. Dans le cas d'une mise en attente de communication, les mécanismes standards de réémission de type TCP/IP ou UDP/IP peuvent permettre un établissement de la communication sans gêne pour les usagers.

Dans le cas où la communication est rejetée ou les mécanismes de réémission ne permettent pas un rétablissement de la communication, l'usager devra renouveler sa tentative de communication.

De façon générale, un terminal TA après s'être reconnecté à Internet et avoir obtenu une adresse IP publique, se connecte au système SCA au travers d'un tunnel et lui donne son adresse IP publique et son identifiant, par exemple un identifiant unique alloué par le service et stocké dans le terminal d'accès SCA, un numéro unique de son équipement, une adresse MAC d'une de ses interfaces ou encore son numéro téléphonique d'appel.

Le système SCA peut traiter directement ou indirectement ses données en s'appuyant sur un système d'information pour vérifier si le terminal TA est connu du système et si le terminal TA doit recevoir des règles de sécurité et/ou une politique de réveil. Le système SCA construit les informations nécessaires au terminal TA et lui fournit ses règles de sécurité à appliquer aux connections Internet, les règles de sécurité ne s'appliquant qu'aux adresses IP valides de ses terminaux d'accès correspondants, la liste des autres terminaux d'accès qui doivent être réveillés avant d'établir des communications vers la liste des adresses IP de leur système protégé et les clés de chiffrement nécessaires pour établir les tunnels. Le système SCA construit une mise à jour des règles de sécurité et de la politique de réveil des terminaux d'accès susceptibles de correspondre avec un terminal TA qui vient de se connecter et d'obtenir une adresse IP publique. Le terminal TA applique les règles de sécurité initiales qui lui sont délivrées par le système SCA ainsi que la mise à jour de ces politiques. Le terminal TA applique les politiques de réveil initiales qui lui sont délivrées par le système SCA ainsi que les mises à jour de ses politiques de réveil.

Le terminal TA1 applique les règles de sécurité courantes pour ouvrir le tunnel vers le terminal TA2 par ses propres moyens en détectant qu'un tunnel doit être créé et ouvert vers le terminal TA2 pour atteindre l'adresse IP de destination, en utilisant l'adresse IP publique du terminal TA2 délivrée par le système SCA, en établissant le tunnel vers le terminal TA2 indépendamment du système SCA mais en utilisant les politiques délivrées par le système SCA, en signalant l'établissement et la destruction du tunnel au système SCA. Le signalement de l'établissement et la destruction du tunnel sont optionnels peuvent être configurés dans les règles de sécurité.

Le terminal d'accès TA1 peut établir une communication par un tunnel vers le terminal TA2 quand bien même ce dernier ne serait pas connecté à Internet en utilisant la politique de réveil du terminal d'accès TA1 pour déterminer si le terminal TA2 peut être réveillé, une demande de réveil au besoin du système SCA au travers un tunnel entre le terminal TA1 et le système SCA, et une mise à jour sur les règles de sécurité du terminal TA1 contenant les informations nécessaires à l'établissement du tunnel du terminal TA2 et la réalisation des communications vers les systèmes protégés par le terminal TA2.

Le système SCA peut recevoir les demandes de réveil depuis le terminal TA1 et réveiller le terminal TA2 après avoir vérifié que le terminal TA1 a le droit de réveiller le terminal TA2 et que le terminal TA2 n'est pas déjà connecté au réseau et ne possède pas déjà une adresse publique.

Le terminal TA2 qui reçoit un signal de réveil, se connecte à Internet pas ses propres moyens et communique avec le système SCA au travers d'un tunnel pour signaler au système SCA son adresse IP publique, obtenir des règles de sécurité et une politique de réveil concernant les terminaux d'accès avec lesquels le terminal TA2 peut obtenir une communication et s'acquitter auprès du système SCA de la fin de la procédure de réveil du terminal TA2.

Le système SCA peut construire et fournir au correspondant d'un terminal d'accès qui vient de se connecter après un réveil, une mise à jour des règles de sécurité desdits correspondants, une mise à jour des politiques de réveil desdits correspondants et une mise à jour des clés de chiffrement nécessaires à l'établissement des tunnels entre lesdits correspondants et le terminal TA qui vient de se connecter.

La système SCA peut à tout moment demander à un terminal TA ses règles de sécurité et sa politique de réveil pour les comparer avec des données stockées dans son système d'information pour vérifier s'il n'y a pas eu de modifications non autorisées par un système autre que le système SCA. Le système SCA peut à tout moment demander à un terminal TA la liste des tunnels opérationnels et de fermer l'un d'entre eux sur requête d'un usager autorisé.

## Revendications

1. Procédé de communication de données entre un premier poste-utilisateur d'un premier réseau et un deuxième poste-utilisateur d'un deuxième réseau par un réseau du type Internet, dans lequel :
- après qu'un terminal d'accès a obtenu une adresse publique destinée à une communication entre le premier poste-utilisateur et le deuxième poste-utilisateur, ledit terminal d'accès se connecte à l'administrateur, l'administrateur fournit audit terminal d'accès des données de connexion et à des destinataires lesdites données de connexion et ladite adresse publique,
- le terminal d'accès établit un tunnel de communication avec le deuxième poste-utilisateur ou avec un terminal d'accès du deuxième poste-utilisateur, puis une communication avec le deuxième poste-utilisateur.

2. Procédé selon la revendication 1, dans lequel ledit terminal d'accès se connecte à l'administrateur en établissant un tunnel de communication.

3. Procédé selon la revendication 2, dans lequel ledit tunnel de communication est chiffré.

4. Procédé selon l'une quelconque des revendications précédentes, dans lequel ledit terminal d'accès envoie à l'administrateur son adresse publique et son identifiant.

5. Procédé selon l'une quelconque des revendications précédentes, dans lequel les données de connexion fournies par l'administrateur audit terminal d'accès comprennent des règles de sécurité et une liste de terminaux d'accès à réveiller.

6. Procédé selon l'une quelconque des revendications précédentes, dans lequel le tunnel de communication entre le terminal d'accès et l'administrateur est détruit une fois que l'administrateur a fourni au terminal d'accès des données de connexion permettant au terminal d'accès d'établir des tunnels de communication vers d'autres postes-utilisateurs.

7. Procédé selon l'une quelconque des revendications précédentes, dans lequel, à la fin de la communication avec le deuxième poste-utilisateur, le tunnel de communication est détruit.

8. Procédé selon l'une quelconque des revendications précédentes, dans lequel le terminal d'accès établit un tunnel de communication avec un autre terminal d'accès en communication avec le deuxième poste-utilisateur, puis une communication avec ledit autre terminal d'accès.

9. Procédé selon la revendication 8, dans lequel les données de connexion fournies par l'administrateur audit terminal d'accès sont également fournies à l'autre terminal d'accès.

10. Système de communication de données comprenant un premier poste-utilisateur d'un premier réseau, un terminal d'accès (TA), un administrateur de réseau (SCA) et un deuxième poste-utilisateur d'un deuxième réseau, le réseau étant du type Internet, **caractérisé par le fait que** le terminal d'accès comprend un moyen pour obtenir une adresse publique destinée à une communication entre le premier poste-utilisateur et le deuxième poste-utilisateur, un moyen pour se connecter à l'administrateur, et un moyen pour établir un tunnel de communication avec le deuxième poste-utilisateur ou avec un terminal d'accès du deuxième poste-utilisateur, puis une communication avec le deuxième poste-utilisateur, et l'administrateur comprend un moyen pour fournir des données de connexion audit terminal d'accès et un moyen pour fournir lesdites données de connexion et ladite adresse publique à des destinataires.

11. Programme d'ordinateur comprenant des moyens de code programme pour mettre en oeuvre les étapes du procédé selon l'une quelconque des revendications 1 à 9, lorsque ledit programme fonctionne sur un ordinateur.

12. Support capable d'être lu par un dispositif de lecture de moyens de code programme qui s'y trouvent stockés et qui sont aptes à la mise en oeuvre des étapes du procédé selon l'une quelconque des revendications 1 à 9, lorsque ledit programme fonctionne sur un ordinateur.
